(19) Europäisches Patentamt
European Patent Office
Office européen des brevets

(11) EP 3 688 208 B1

(12) # EUROPEAN PATENT SPECIFICATION

(45) Date of publication and mention of the grant of the patent:
**30.11.2022 Bulletin 2022/48**

(21) Application number: **17927238.0**

(22) Date of filing: **29.09.2017**

(51) International Patent Classification (IPC):
***D01F 8/06*** *(2006.01)* ***D04H 3/007*** *(2012.01)*
***D04H 3/147*** *(2012.01)* ***D01D 5/098*** *(2006.01)*

(52) Cooperative Patent Classification (CPC):
**D04H 3/007; D01D 5/0985; D01F 8/06; D04H 3/147**

(86) International application number:
**PCT/CN2017/104303**

(87) International publication number:
**WO 2019/061267 (04.04.2019 Gazette 2019/14)**

(54) **BICOMPONENT FIBERS, AND NONWOVENS THEREOF, HAVING IMPROVED ELASTIC PERFORMANCE**

ZWEIKOMPONENTIGE FASERN UND VLIESSTOFFE DARAUS, MIT VERBESSERTER ELASTISCHER LEISTUNG

FIBRES À DEUX CONSTITUANTS, ET NON-TISSÉS ASSOCIÉS, AYANT DES PERFORMANCES ÉLASTIQUES AMÉLIORÉES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**05.08.2020 Bulletin 2020/32**

(73) Proprietor: **Dow Global Technologies LLC**
**Midland, MI 48674 (US)**

(72) Inventors:
- **CHEN, Lihua**
**Shanghai 201203 (CN)**
- **MAEHARA, Yutaka**
**Yokohama-shi**
**Kanagawa 221-0024 (JP)**

(74) Representative: **Boult Wade Tennant LLP**
**Salisbury Square House**
**8 Salisbury Square**
**London EC4Y 8AP (GB)**

(56) References cited:
**EP-B1- 1 366 224**
**WO-A1-03/000969**
**CN-A- 102 016 149**
**CN-A- 103 201 416**
**JP-A- H05 230 751**
**JP-A- H06 330 442**
**JP-A- 2000 158 593**

- **PENG YING-YING: "Sheath/Composite Fiber Prepared by Prepared by polypropylene and New Polyolefin Elastomer", Synthetic Fiber in China, no. 2, 25 February 2009 (2009-02-25), pages 17-20, XP009520178, ISSN: 1001-7054, DOI: 10.16090/j.cnki.hcxw.2009.02.005**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 3 688 208 B1

## Description

### TECHNICAL FIELD

Embodiments of the present disclosure generally relate to bicomponent fibers, and particularly, to bicomponent fibers for use in nonwoven fabrics.

### BACKGROUND

Nonwoven fabrics (NW) are cloth-like materials that are manufactured from filaments which are brought together via different bonding techniques (e.g., spunbond or meltblown processes). These nonwoven fabrics may be used in hygiene and/or medical applications, such as, disposable absorbent articles, including diapers, wipes, feminine hygiene products, and adult incontinence products. In such applications, a spunbond meltblown spunbond (SMS) composite structure is becoming increasingly popular. The spunbond layer was historically formed from polypropylene monocomponent fibers due to its mechanical performance. One of the major drawbacks of polypropylene is the lack of softness and elasticity.

Accordingly, alternative resins may be desirable for use in bicomponent fibers and nonwovcns that may exhibit improved clastic performance.

WO 2009/111185 A2 discloses spunbond nonwovens comprising core-sheath bicomponent fibers having an ethylene/alpha-olefin block copolymer core and a polyolefin sheath.

### SUMMARY

Disclosed herein are bicomponent fibers. The bicomponent fibers have a sheath and a core, wherein: the core comprises at least 50 wt.% of an ethylene/alpha-olefin block copolymer having a density of 0.860 g/cc - 0.885 g/cc and a melt index, 12, of 10 g/10 min to 60 g/10 min; and the sheath comprises at least 50 wt.% of a propylene-based elastomer having a melt flow ratio, MFR, of 30 g/10 min to 250 g/10 min; wherein the core/sheath viscosity ratio is from 1:1 to 5:1 at a shear rate of 1,000/s to 5,000/s.

Also disclosed herein are spunbond nonwovens. The spunbond nonwovens are formed from bicomponent fibers. The bicomponent fibers have a sheath and a core, wherein: the core comprises at least 50 wt.% of an ethylene/alpha-olefin block copolymer having a density of 0.860 g/cc - 0.885 g/cc and a melt index, 12, of 10 g/10 min to 60 g/10 min; and the sheath comprises at least 50 wt.% of a propylene-based elastomer having a melt flow ratio, MFR, of 30 g/10 min to 250 g/10 min; wherein the core/sheath viscosity ratio is from 1:1 to 5:1 at a shear rate of 1,000/s to 5,000/s.

Additional features and advantages of the embodiments will be set forth in the detailed description which follows, and in part will be readily apparent to those skilled in the art from that description or recognized by practicing the embodiments described herein, including the detailed description which follows, the claims, as well as the appended drawings.

It is to be understood that both the foregoing and the following description describe various embodiments and are intended to provide an overview or framework for understanding the nature and character of the claimed subject matter. The accompanying drawings are included to provide a further understanding of the various embodiments, and are incorporated into and constitute a part of this specification. The drawings illustrate the various embodiments described herein, and together with the description serve to explain the principles and operations of the claimed subject matter.

### BRIEF DESCRIPTION OF THE DRAWINGS

FIG. 1 graphically depicts a second cycle hysteresis curve in the machine direction for two inventive bicomponent elastic nonwovens according to one or more embodiments herein versus a comparative nonwoven.

FIG. 2 graphically depicts a second cycle hysteresis curve in the cross direction for two inventive bicomponent elastic nonwovens according to one or more embodiments herein versus a comparative nonwoven.

FIG. 3 graphically depicts seal performance for two inventive bicomponent elastic nonwovens according to one or more embodiments herein versus a comparative nonwoven

## DETAILED DESCRIPTION

Reference will now be made in detail to embodiments of bicomponent fibers, characteristics of which are illustrated in the accompanying drawings, which may be used to produce nonwovens, such as spunbond nonwoven fabrics for use in hygiene absorbent articles, such as, diapers, wipes, feminine hygiene, and adult incontinence products. It is noted, however, that this is merely an illustrative implementation of the embodiments disclosed herein. The embodiments are applicable to other technologies that are susceptible to similar problems as those discussed above. For example, the bicomponent fibers may be used in spunbond nonwoven fabrics to produce face masks, surgical gowns, isolation gowns, surgical drapes and covers, surgical caps, tissues, bandages, and wound dressings are clearly within the purview of the present embodiments.

### Bicomponent Fibers

In embodiments herein, the bicomponent fibers comprise a core and a sheath. The sheath to core ratio may range from 20/80 to 5/95 or 20/80 to 10/90. In some embodiments, the sheath to core ratio may range from 30/70 to 5/95.

In embodiments herein, the bicomponent fibers described herein have a core/sheath viscosity ratio of from 1:1 to 5:1 at a shear rate of 1,000/s to 5,000/s. All individual values and subranges are included and disclosed herein. For example, in some embodiments, the bicomponent fibers may have a core/sheath viscosity ratio of from 1:1 to 3:1 at a shear rate of 1,000/s to 5,000/s. In other embodiments, the bicomponent fibers may have a core/sheath viscosity ratio of from 1:1 to 2:1 at a shear rate of 1,000/s to 5,000/s.

### Core

The core comprises at least 50 wt.% of an ethylene/alpha-olefin block copolymer. All individual values and subranges of at least 50 wt.% are included and disclosed herein. For example, in some embodiments, the core comprises at least 55 wt.%, at least 60 wt.%, at least 70 wt.% at least 75 wt.%, at least 80 wt.%, at least 85 wt.%, at least 90 wt.%, at least 95 wt.%, or 100 wt.% of an ethylene/alpha-olefin block copolymer. In other embodiments, the core comprises greater than 50 wt.% to 100 wt.%, greater than 75 wt.% to 100 wt.%, or 85 wt.% to 100 wt.%, of an ethylene/alpha-olefin block copolymer. In further embodiments, the core comprises 90 to 100 wt.%.

The term "ethylene-$\alpha$-olefin block copolymer" or "OBC" means an ethylene/$\alpha$-olefin multi-block copolymer and includes ethylene and one or more copolymerizable $\alpha$-olefin comonomer in polymerized form, and is characterized by multiple blocks or segments of two or more polymerized monomer units differing in chemical or physical properties. The terms "interpolymer" and "copolymer" are used interchangeably herein. When referring to amounts of "ethylene" or "comonomer" in the copolymer, it is understood that this means polymerized units thereof. Ethylene-$\alpha$-olefin block copolymers used in embodiments described herein can be represented by the following formula:

$$(AB)_n$$

where: n is at least 1, and, in some embodiments, an integer greater than 1, such as 2, 3, 4, 5, 10, 15, 20, 30, 40, 50, 60, 70, 80, 90, 100, or higher; "A" represents a hard block or segment; and "B" represents a soft block or segment. In some embodiments, As and Bs are linked in a substantially linear fashion, as opposed to a substantially branched or substantially star-shaped fashion. In other embodiments, A blocks and B blocks are randomly distributed along the polymer chain. In other words, the block copolymers usually do not have a structure as follows.

AAA-AA-BBB-BB

In still other embodiments, the ethylene-$\alpha$-olefin block copolymers described herein do not usually have a third type of block, which comprises a different comonomer(s). In yet other embodiments, each of block A and block B has monomers or comonomers substantially randomly distributed within the block. In other words, neither block A nor block B comprises two or more sub-segments (or sub-blocks) of distinct composition, such as a tip segment, which has a substantially different composition than the rest of the block.

In embodiments herein, ethylene may comprise the majority mole fraction of the whole ethylene-$\alpha$-olefin block copolymers, i.e., ethylene comprises at least 50 mol.% of the whole polymer. In some embodiments, ethylene comprises at least 60 mol.%, at least 70 mol.%, or at least 80 mol.%. The substantial remainder of the whole polymer comprises at least one other comonomer that is an alpha-olefin having 3 or more carbon atoms and no more than 20 carbon atoms. The alpha-olefins may be selected from the group consisting of C3-C20 acetylenically unsaturated monomers and C4-C18 diolefins. For example, the alpha-olefin comonomers may have 3 to 10 carbon atoms, or 3 to 8 carbon atoms.

Exemplary alpha-olefin comonomers include, but are not limited to, propylene, 1-butene, 1-pentene, 1-hexene, 1-heptene, 1-octene, 1-nonene, 1-decene, and 4-methyl-1-pentene. In some embodiments, the ethylene-α-olefin block copolymers described herein may comprise 50 mol.% to 90 mol.%, 60 mol.% to 85 mol.%, or 65 mol.% to 80 mol.% of ethylene. The comonomer content may be measured using any suitable technique, such as techniques based on nuclear magnetic resonance ("NMR") spectroscopy, and, for example, by $^{13}C$ NMR analysis as described in U.S. Patent 7,498,282, which is incorporated herein by reference.

The ethylene-α-olefin block copolymers described herein include various amounts of "hard" and "soft" segments. "Hard" segments are blocks of polymerized units in which ethylene is present in an amount greater than 95 wt.%, or greater than 98 wt.% based on the weight of the polymer, up to 100 wt.%. In other words, the comonomer content (content of monomers other than ethylene) in the hard segments is less than 5 wt.%, or less than 2 wt.% based on the weight of the polymer, and can be as low as zero. In some embodiments, the hard segments include all, or substantially all, units derived from ethylene. "Soft" segments are blocks of polymerized units in which the comonomer content (content of monomers other than ethylene) is greater than 5 wt.%, or greater than 8 wt.%, greater than 10 wt.%, or greater than 15 wt.% based on the weight of the polymer. In some embodiments, the comonomer content in the soft segments can be greater than 20 wt.%, greater than 25 wt.%, greater than 30 wt.%, greater than 35 wt.%, greater than 40 wt.%, greater than 45 wt.%, greater than 50 wt.%, or greater than 60 wt.% and can be up to 100 wt.%.

The soft segments can be present in the ethylene-α-olefin block copolymers described herein from 1 wt.% to 99 wt.% of the total weight of the ethylene-α-olefin block copolymer, or from 5 wt.% to 95 wt.%, from 10 wt.% to 90 wt.%, from 15 wt.% to 85 wt.%, from 20 wt.% to 80 wt.%, from 25 wt.% to 75 wt.%, from 30 wt.% to 70 wt.%, from 35 wt.% to 65 wt.%, from 40 wt.% to 60 wt.%, or from 45 wt.% to 55 wt.% of the total weight of the ethylene-α-olefin block copolymer. Conversely, the hard segments can be present in similar ranges. The soft segment weight percentage and the hard segment weight percentage can be calculated based on data obtained from DSC or NMR. Such methods and calculations are disclosed in, for example, U.S. Patent No. 7,608,668, entitled "Ethylene/α-Olefin Block Inter-polymers," filed on March 15, 2006, in the name of Colin L. P. Shan, Lonnie Hazlitt, et. al. and assigned to Dow Global Technologies Inc., the disclosure of which is incorporated by reference herein in its entirety. In particular, hard and soft segment weight percentages and comonomer content may be determined as described in Column 57 to Column 63 of U.S. 7,608,668.

The ethylene-α-olefin block copolymers described herein comprise two or more chemically distinct regions or segments (referred to as "blocks") that can be joined in a linear manner, that is, a polymer comprising chemically differentiated units which are joined end-to-end with respect to polymerized ethylenic functionality, rather than in pendent or grafted fashion. In some embodiments, the blocks differ in the amount or type of incorporated comonomer, density, amount of crystallinity, crystallite size attributable to a polymer of such composition, type or degree of tacticity (isotactic or syndiotactic), regio regularity or regio-irregularity, amount of branching (including long chain branching or hyper branching), homogeneity or any other chemical or physical property. Compared to block interpolymers of the prior art, including interpolymers produced by sequential monomer addition, fluxional catalysts, or anionic polymerization techniques, the ethylene-α-olefin block copolymers may be characterized by unique distributions of both polymer polydispersity (PDI or Mw/Mn or MWD), block length distribution, and/or block number distribution, due, in an embodiment, to the effect of the shuttling agent(s) in combination with multiple catalysts used in their preparation.

In some embodiments, the ethylene-α-olefin block copolymers described herein are produced in a continuous process and possess a polydispersity index, PDI, from 1.7 to 3.5, from 1.8 to 3, from 1.8 to 2.5, or from 1.8 to 2.2. When produced in a batch or semi-batch process, the ethylene-α-olefin block copolymers described herein possess PDI from 1.0 to 3.5, from 1.3 to 3, from 1.4 to 2.5, or from 1.4 to 2. In addition, the ethylene-α-olefin block copolymers described herein possess a PDI fitting a Schultz-Flory distribution rather than a Poisson distribution. In embodiments herein, the ethylene-α-olefin block copolymers described herein may have both a polydisperse block distribution as well as a polydisperse distribution of block sizes. This results in the formation of polymer products having improved and distinguishable physical properties. The theoretical benefits of a polydisperse block distribution have been previously modeled and discussed in Potemkin, Physical Review E (1998) 57 (6), pp. 6902-6912, and Dobrynin, J. Chem.Phvs. (1997) 107 (21), pp 9234-9238.

In embodiments herein, the ethylene/alpha-olefin block copolymer has a density of 0.860 g/cc - 0.885 g/cc, and a melt index, 12, of 10 g/10 min to 60 g/10 min. All individual values and subranges are included and described herein. For example, in some embodiments, the ethylene/alpha-olefin block copolymer may have a density of 0.860 g/cc - 0.882 g/cc, 0.863 g/cc to 0.882 g/cc, or 0.865 g/cc to 0.880 g/cc, and a melt index, 12, of 10 g/10 min to 50 g/10 min, 10 g/10 min to 40 g/10 min, 10 g/10 min to 30 g/10 min, or 10 g/10 min to 20 g/10 min.

The level of crystallinity may be reflected in the melting point. "Melting point" is determined by DSC. The ethylene/alpha-olefin block copolymer may have one or more melting points. The peak having the highest heat flow (i.e., tallest peak height) of these peaks is considered the melting point. In addition to the density and melt index, the ethylene/alpha-olefin block copolymer may have a melting point, as determined by differential scanning calorimetry (DSC), ranging from 113°C to 128°C or 113°C to 124°C.

The ethylene/alpha-olefin block copolymers described herein can be produced via a chain shuttling process

such as described in U.S. Patent No. 7,858,706, which is herein incorporated by reference. In particular, suitable chain shuttling agents and related information are listed in Col. 16, line 39 through Col. 19, line 44. Suitable catalysts are described in Col. 19, line 45 through Col. 46, line 19 and suitable co-catalysts in Col. 46, line 20 through Col. 51 line 28. The process is described throughout the document, but particularly in Col. 51, line 29 through Col. 54, line 56. The process is also described, for example, in U.S. Patent Nos. 7,608,668; 7,893,166; and 7,947,793.

The core may optionally comprise one or more additives. Such additives may include, but are not limited to, slip agents (e.g., fatty acid amides or ethylenebis(amides), an unsaturated fatty acid amides, or ethylenebis(amides)), antiblock agents (e.g., clay, aluminum silicate, diatomaceous earth, silica, talc, calcium carbonate, limestone, fumed silica, magnesium sulfate, magnesium silicate, alumina trihydrate, magnesium oxide, zinc oxide, or titanium dioxide), compatibilizers (e.g., ethylene ethyl acrylate (AMPLIFY™ EA), maleic anhydride grafted polyethylene (AMPLIFY™ GR), ethylene acrylic acid (PRIMACOR™), ionomers (AMPLIFY™ IO), and other functional polymers (AMPLIFY™ TY), all of which are available from The Dow Chemical Company; maleic anhydride styrenic block copolymer (KRATON™ FG), available from Kraton Polymers; maleic anhydride grafted polyethylene, polypropylene, copolymers (EXXELOR™), available from The ExxonMobil Chemical Company; modified ethylene acrylate carbon monoxide terpolymers, ethylene vinyl acetates (EVAs), polyethylenes, metallocene polyethylenes, ethylene propylene rubbers and polypropylenes with acid, maleic anhydride, acrylate functionality (FUSABOND™, BYNEL™, NUCREL™, ELVALOY™, ELVAX™) and ionomers (SURLYN™), available from E. I. du Pont de Nemours and Company), antioxidants (e.g., hindered phenolics, such as, IRGANOX® 1010 or IRGANOX® 1076, supplied by Ciba Geigy), phosphites (e.g., IRGAFOS® 168, also supplied by Ciba Geigy), cling additives (e.g., PIB (polyisobutylene)), Standostab PEPQ™ (supplied by Sandoz), pigments, colorants, fillers (e.g., calcium carbonate, talc, mica, kaolin, perlite, diatomaceous earth, dolomite, magnesium carbonate, calcium sulfate, barium sulfate, glass beads, polymeric beads, ceramic beads, natural and synthetic silica, aluminum trihydroxide, magnesium trihydroxide, wollastonite, whiskers, wood flour, lignine, starch), $TiO_2$, anti-stat additives, flame retardants, biocides, antimicrobial agents, and clarifiers/nucleators (e.g., HYPERFORM™ HPN-20E, MILLAD™ 3988, MILLAD™NX 8000, available from Milliken Chemical). The one or more additives can be included in the core at levels typically used in the art to achieve their desired purpose. In some examples, the one or more additives are included in amounts ranging from 0-10 wt.% of the core, 0-5 wt.% of the core, 0.001-5 wt.% of the core, 0.001-3 wt.% of the core, 0.05-3 wt.% of the core, or 0.05-2 wt.% of the core.

## Sheath

The sheath comprises at least 50 wt.% of a propylene-based elastomer. All individual values and subranges of at least 50 wt.% are included and disclosed herein. For example, in some embodiments, the sheath comprises at least 55 wt.%, at least 60 wt.%, at least 70 wt.% at least 75 wt.%, at least 80 wt.%, at least 85 wt.%, at least 90 wt.%, at least 95 wt.%, or 100 wt.% of a propylene-based elastomer. In other embodiments, the sheath comprises greater than 50 wt.% to 100 wt.%, greater than 75 wt.% to 100 wt.%, or 85 wt.% to 100 wt.%, of a propylene-based elastomer. In further embodiments, the sheath comprises 80 wt.% to 100wt.%.

The propylene-based elastomer comprises propylene and an $\alpha$-olefin having 2 carbon atoms or 4 or more carbon atoms. In some embodiments herein, the propylene-based elastomer comprises at least 60 wt.% of the units derived from propylene and between 1 and 40 wt.% of the units derived from ethylene (based on the total amount of polymerizable monomers). All individual values and subranges of at least 60 wt.% of the units derived from propylene between 1 and 40 wt.% of the units derived from ethylene are included and disclosed herein. For example, in some embodiments, the propylene-based elastomer comprises (a) at least 65 wt.%, at least 70 wt.%, at least 75 wt.%, at least 80 wt.% , at least 82 wt.% , at least 85 wt.% , at least 87 wt.% , at least 90 wt.% , at least 92 wt.% , at least 95 wt.% , at least 97 wt.% , from 60 to 99 wt.%, from 60 to 99 wt.%, from 65 to 99 wt.%, from 70 to 99 wt.%, from 75 to 99 wt.%, from 80 to 99 wt.%, from 82 to 99 wt.%, from 84 to 99 wt.%, from 85 to 99 wt.%, from 88 to 99 wt.%, from 80 to 97 wt.%, from 82 to 97 wt.%, from 85 to 97 wt.%, from 88 to 97 wt.%, from 80 to 95.5 wt.%, from 82 to 95.5 wt.%, from 84 to 95.5 wt.%, 85 to 95.5 wt.%, or from 88 to 95.5 wt.%, of the units derived from propylene; and (b) between 1 and 40 wt.%, for example, from 1 to 35%, from 1 and 30%, from 1 and 25%, from 1 to 20 %, from 1 to 18%, from 1 to 16 %, 1 to 15%, 1 to 12%, 3 to 20%, 3 to 18%, 3 to 16%, 3 to 15%, 3 to 12%, 4.5 to 20%, 4.5 to 18%, 4.5 to 16%, 4.5 to 15%, or 4.5 to 12%, by weight, of units derived from ethylene. The comonomer content may be measured using any suitable technique, such as techniques based on nuclear magnetic resonance ("NMR") spectroscopy, and, for example, by 13C NMR analysis as described in U.S. Patent 7,498,282, which is incorporated herein by reference. Exemplary propylene-based elastomer may include Exxon-Mobil Chemical Company VISTAMAXX™ polymers, and VERSIFY™ polymers by The Dow Chemical Company.

The propylene-based elastomer can be made by any process, and include random, block and graft copolymers. In some embodiments, the propylene interpolymers are of a random configuration. These include interpolymers made by Ziegler-Natta, CGC (Constrained Geometry Catalyst), metallocene, and non-metallocene, metal-centered, heteroaryl ligand catalysis. Additional suitable metal complexes include compounds corresponding to the formula:

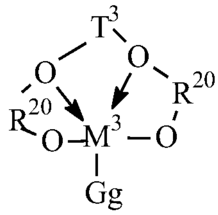

,

where:

$R^{20}$ is an aromatic or inertly substituted aromatic group containing from 5 to 20 atoms not counting hydrogen, or a polyvalent derivative thereof;
$T^3$ is a hydrocarbylene or silane group having from 1 to 20 atoms not counting hydrogen, or an inertly substituted derivative thereof;
$M^3$ is a Group 4 metal, preferably zirconium or hafnium;
G is an anionic, neutral or dianionic ligand group; preferably a halide, hydrocarbyl or dihydrocarbylamide group having up to 20 atoms not counting hydrogen;
g is a number from 1 to 5 indicating the number of such G groups; and

covalent bonds and electron donative interactions are represented by lines and arrows respectively.

In some embodiments, such complexes correspond to the formula:

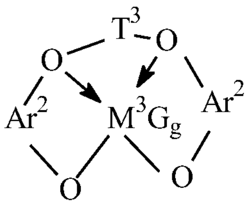

,

wherein:

$T^3$ is a divalent bridging group of from 2 to 20 atoms not counting hydrogen, preferably a substituted or unsubstituted, $C_{3-6}$ alkylene group; and
$Ar^2$ independently each occurrence is an arylene or an alkyl- or aryl-substituted arylene group of from 6 to 20 atoms not counting hydrogen;
$M^3$ is a Group 4 metal, preferably hafnium or zirconium;
G independently each occurrence is an anionic, neutral or dianionic ligand group;
g is a number from 1 to 5 indicating the number of such X groups; and
electron donative interactions are represented by arrows.

Examples of metal complexes of the foregoing formula include the following compounds:

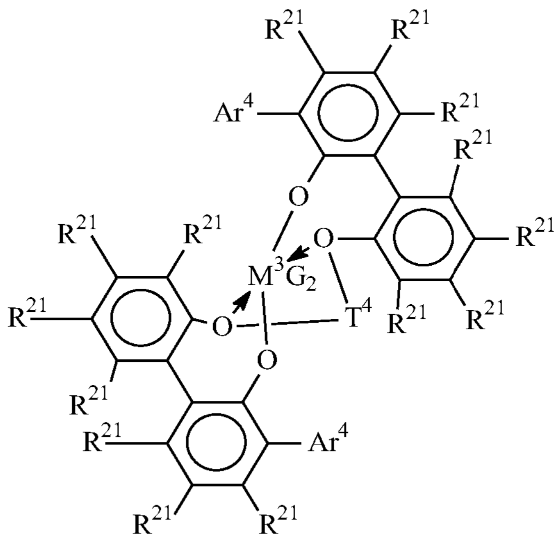

where:

$M^3$ is Hf or Zr;
$Ar^4$ is $C_{6-20}$ aryl or inertly substituted derivatives thereof, especially 3,5-di(isopropyl)phenyl, carbazole, 3,5-di(isobutyl)phenyl, dibenzo-1H-pyrrole-1-yl, or anthracen-5-yl, and
$T^4$ independently each occurrence comprises a $C_{3-6}$ alkylene group, a $C_{3-6}$ cycloalkylene group, or an inertly substituted derivative thereof;
$R^{21}$ independently each occurrence is hydrogen, halo, hydrocarbyl, trihydrocarbylsilyl, or trihydrocarbylsilylhydrocarbyl of up to 50 atoms not counting hydrogen; and
G, independently each occurrence is halo or a hydrocarbyl or trihydrocarbylsilyl group of up to 20 atoms not counting hydrogen, or 2 G groups together are a divalent derivative of the foregoing hydrocarbyl or trihydrocarbylsilyl groups.

Without limiting in any way the scope of the invention, one means for making a propylene-based elastomer as described herein is as follows: in a stirred-tank reactor, the monomers to be polymerized are introduced continuously together with any solvent or diluent, and, in some embodiments, the solvent is an alkane hydrocarbon solvent, such as, ISOPAR™ E. The reactor contains a liquid phase composed substantially of monomers together with any solvent or diluent and dissolved polymer. Catalyst along with cocatalyst and, optionally, chain transfer agent, are continuously or intermittently introduced in the reactor liquid phase or any recycled portion thereof. The reactor temperature may be controlled by adjusting the solvent/monomer ratio, the catalyst addition rate, as well as by use of cooling or heating coils, jackets or both. The polymerization rate is controlled by the rate of catalyst addition. Pressure is controlled by the monomer flow rate and partial pressures of volatile components. The propylene content of the polymer product is determined by the ratio of propylene to comonomer in the reactor, which is controlled by manipulating the respective feed rates of these components to the reactor. The polymer product molecular weight is controlled, optionally, by controlling other polymerization variables such as the temperature, monomer concentration, or flow rate of the previously mentioned chain transfer agent. Upon exiting the reactor, the effluent is contacted with a catalyst kill agent such as water, steam, or an alcohol. The polymer solution is optionally heated, and the polymer product is recovered by flashing off gaseous unreacted monomers as well as residual solvent or diluent at reduced pressure, and, if necessary, conducting further devolatilization in equipment, such as, a devolatilizing extruder. In a continuous process, the mean residence time of the catalyst and polymer in the reactor generally is from 5 minutes to 8 hours, and, in some embodiments, is from 10 minutes to 6 hours.

Without limiting in any way the scope of the invention, another means for making a propylene-based elastomer as described herein is as follows: continuous solution polymerizations may be carried out in a computer controlled autoclave reactor equipped with an internal stirrer. Purified mixed alkanes solvent (ISOPAR™ E available from ExxonMobil, Inc.), ethylene, propylene, and hydrogen may be continuously supplied to a 3.8 L reactor equipped with a jacket for temperature control and an internal thermocouple. The solvent feed to the reactor may be measured by a mass-flow controller. A variable speed diaphragm pump controls the solvent flow rate and pressure to the reactor. At the discharge of the pump, a side stream is taken to provide flush flows for the catalyst and cocatalyst injection lines and the reactor agitator. These flows may be measured by mass flow meters and controlled by control valves or by the manual adjustment of needle valves. The remaining solvent is combined with monomers and hydrogen and fed to the reactor. A mass flow

controller is used to deliver hydrogen to the reactor as needed. The temperature of the solvent/monomer solution is controlled by use of a heat exchanger before entering the reactor. This stream enters the bottom of the reactor.

The catalyst and cocatalyst component solutions may be metered using pumps and mass flow meters and are combined with the catalyst flush solvent and introduced into the bottom of the reactor. The catalyst may be a metal complex as described above. In some embodiments, the catalyst may be bis((2-oxoyl-3-(dibenzo-1H-pyrrole-1-yl)-5-(methyl)phenyl)-2-phenoxymethyl)-methylenetrans-1,2-cyclohexanediylhafnium (IV) dimethyl, as outlined above. The cocatalyst may be a long-chain alkyl ammonium borate of approximate stoichiometry equal to methyldi(octadecyl)ammonium tetrakis(pentafluorophenyl)borate (MDB) combined with a tertiary component, tri(isobutyl)aluminum-modified methalumoxane (MMAO) containing a molar ratio of i-butyl/methyl groups of about 1/3. The catalyst/cocatalyst may have a molar ratio based on Hf of 1.0/1 to 1.5/1, and MMAO (ratio of 25/1 - 35/1, Al/Hf). The reactor may be run liquid-full at 500-525 psig (3.45-3.62 MPa) with vigorous stirring. The reactor temperature may range from 125°C to 165°C and the propylene conversion percent may be about 80%. The reactor operates at a polymer concentration of between about 15 to 20 wt.%. The propylene conversion in the reactor may be maintained by controlling the catalyst injection rate. The reaction temperature may be maintained by controlling the water temperature across the shell side of the heat exchanger. The polymer molecular weight may be maintained by controlling the hydrogen flow.

Product is removed through exit lines at the top of the reactor. All exit lines from the reactor are steam traced and insulated. Polymerization may be stopped by the addition of a small amount of water into the exit line along with any stabilizers or other additives and passing the mixture through a static mixer. The product stream may then be heated by passing through a heat exchanger before devolatilization. The polymer product may be recovered by extrusion using a devolatilizing extruder and water cooled pelletizer.

In some embodiments, the polymer product may be further processed to increase the melt flow rate, MFR. Isotactic polypropylene is a semi-crystalline polymer. Organic peroxides may be used to increase the MFR. It is believed that the free radicals generated by using organic peroxides degrade the polypropylene backbone via beta-scission. This chemical process can be used to adjust the melt flow rate and to narrow molecular weight distribution, among other things. This operation may be commoly called "vis breaking" or "PP controlled rheology."

In embodiments herein, the propylene-based elastomer has a melt flow ratio, MFR, of 30 g/10 min to 250 g/10 min. All individual values and subranges are included and disclosed herein. For example, in some embodiments, the propylene-based elastomer has a melt flow ratio, MFR, of 30 g/10 min to 200 g/10 min, 30 g/10 min to 150 g/10 min, 30 g/10 min to 100 g/10 min, or 30 g/10 min to 80 g/10 min.

In some embodiments herein, the propylene-based elastomer may have a molecular weight distribution (Mw/Mn) of 1.5 to 3.0, where Mw is weight average molecular weight and Mn is the number average molecular weight, both of which may be determined by gel permeation chromatography (GPC). All individual values and subranges are included and disclosed herein. For example, in some embodiments, the propylene-based elastomer may have a molecular weight distribution (Mw/Mn) of 1.5 to 2.8, 1.8 to 2.8, 2.0 to 2.8, or 2.0 to 2.6.

In addition to the molecular weight distribution (Mw/Mn), the propylene-based elastomer may have an Mz/Mw of 1.5 to 2.5, where Mz is the z average molecular weight and Mw is the weight average molecular weight, both of which may be determined by GPC. All individual values and subranges are included and disclosed herein. For example, in some embodiments, the propylene-based elastomer may have an Mz/Mw of 1.5 to 2.3, 1.5 to 2.1 or 1.5 to 2.0.

The sheath may optionally comprise one or more additives. Such additives may include, but are not limited to, slip agents (e.g., fatty acid amides or ethylenebis(amides), an unsaturated fatty acid amides, or ethylenebis(amides)), antiblock agents (e.g., clay, aluminum silicate, diatomaceous earth, silica, talc, calcium carbonate, limestone, fumed silica, magnesium sulfate, magnesium silicate, alumina trihydrate, magnesium oxide, zinc oxide, or titanium dioxide), compatibilizers (e.g., ethylene ethyl acrylate (AMPLIFY™ EA), maleic anhydride grafted polyethylene (AMPLIFY™ GR), ethylene acrylic acid (PRIMACOR™), ionomers (AMPLIFY™ IO), and other functional polymers (AMPLIFY™ TY), all of which are available from The Dow Chemical Company; maleic anhydride styrenic block copolymer (KRATON™ FG), available from Kraton Polymers; maleic anhydride grafted polyethylene, polypropylene, copolymers (EXXELOR™), available from The ExxonMobil Chemical Company; modified ethylene acrylate carbon monoxide terpolymers, ethylene vinyl acetates (EVAs), polyethylenes, metallocene polyethylenes, ethylene propylene rubbers and polypropylenes with acid, maleic anhydride, acrylate functionality (FUSABOND™, BYNEL™, NUCREL™, ELVALOY™, ELVAX™) and ionomers (SURLYN™), available from E. I. du Pont de Nemours and Company), antioxidants (e.g., hindered phenolics, such as, IRGANOX® 1010 or IRGANOX® 1076, supplied by Ciba Geigy), phosphites (e.g., IRGAFOS® 168, also supplied by Ciba Geigy), cling additives (e.g., PIB (polyisobutylene)), Standostab PEPQ™ (supplied by Sandoz), pigments, colorants, fillers (e.g., calcium carbonate, talc, mica, kaolin, perlite, diatomaceous earth, dolomite, magnesium carbonate, calcium sulfate, barium sulfate, glass beads, polymeric beads, ceramic beads, natural and synthetic silica, aluminum trihydroxide, magnesium trihydroxide, wollastonite, whiskers, wood flour, lignine, starch), $TiO_2$, anti-stat additives, flame retardants, biocides, antimicrobial agents, and clarifiers/nucleators (e.g., HYPERFORM™ HPN-20E, MILLAD™ 3988, MILLAD™NX 8000, available from Milliken Chemical). The one or more additives can be included in the sheath at levels typically used in the art to achieve their desired purpose. In some examples, the one or more additives are included in amounts ranging

from 0-10 wt.% of the sheath, 0-5 wt.% of the sheath, 0.001-5 wt.% of the sheath, 0.001-3 wt.% of the sheath, 0.05-3 wt.% of the sheath, or 0.05-2 wt.% of the sheath.

Nonwovens

The bicomponent fibers described herein may be used to form nonwovens, such as spunbond nonwovens. In some embodiments, a spunbond nonwoven is formed from the bicomponent fibers described herein. The terms "nonwoven," "nonwoven web," and "nonwoven fabric" are used herein interchangeably. "Nonwoven" refers to a web or fabric having a structure of individual fibers or threads which are randomly interlaid, but not in an identifiable manner as is the case for a knitted fabric. As used herein, "spunbond" refers to fibers formed by extruding a molten thermoplastic polymer composition as filaments through a plurality of fine, usually circular, die capillaries of a spinneret with the diameter of the extruded filaments then being rapidly reduced and thereafter depositing the filaments onto a collecting surface to form a web or fabric of randomly dispersed spunbond fibers with average diameters generally between about 7 and about 30 microns.

The spunbond nonwoven may be used in a composite structure. The composite structure may further comprise one or more spunbond or meltblown nonwovens.

**TEST METHODS**

Density

Density is measured in accordance with ASTM D-792, and expressed in grams/cubic centimeter (g/cc).

Melt Index/Melt Flow Rate

Melt index (I2), for ethylene-based polymers, is measured in accordance with ASTM D 1238-10, Condition, 190°C/2.16 kg, and is reported in grams eluted per 10 minutes. Melt Flow Rate, MFR2, for propylene-based polymers is measured in accordance with ASTM D 1238-10, Condition 230°C/2.16 kg, and is reported in grams eluted per 10 minutes.

Core/Sheath Viscosity

Shear viscosity measurements are carried out using the Rheograph 25 capillary rheometer manufactured by Goettefrt Inc. The capillary die of 1 mm diameter, 180 degrees entrance angle, and length to diameter ratio L/D=30/1 is used. The polymer pellets are loaded in the capillary barrel and melted at 230 °C for 5 min before the testing. The shear rates are set from 10 s-1 to 5000 s-1, and the apparent shear stress and apparent shear viscosity are recorded versus shear rates.

High Temperature Gel Permeation Chromatography (HT-GPC)

*Propylene-Based Polymers*

The polymers are analyzed by gel permeation chromatography (GPC) on a Polymer Laboratories PL-GPC-220 high temperature chromatographic unit equipped with three linear mixed bed columns, 300 × 7.5 mm (Polymer Laboratories PLgel Mixed B (10-micron particle size)). The oven temperature is at 160°C with the autosampler hot zone at 160°C and the warm zone at 145°C. The solvent is 1,2,4-trichlorobenzene containing 200 ppm 2,6-di-t-butyl-4-methylphenol (BHT). The flow rate is 1.0 milliliter/minute and the injection size is 100 microlitcrs. A 0.15% by weight solution of the sample is prepared for injection by dissolving the sample in nitrogen purged 1,2,4-trichlorobenzene containing 200 ppm 2,6-di-t-butyl-4-methylphenol for 2.5 hrs at 160°C with gentle mixing.

The molecular weight determination is deduced by using ten narrow molecular weight distribution polystyrene standards (from Polymer Laboratories, EasiCal PS1 ranging from 580 - 7,500,000 g/mole) in conjunction with their elution volumes. BHT was used as a relative flowrate marker referencing each chromatographic run back to the polystyrene narrow standards calibration curve.

The equivalent polypropylene molecular weights are determined by using appropriate Mark-Houwink coefficients for polypropylene (as described by Th.G. Scholte, N.L.J. Meijerink, H.M. Schoffeleers, and A.M.G. Brands, J. Appl. Polym. Sci., 29, 3763 - 3782 (1984), incorporated herein by reference) and polystyrene (as described by E. P. Otocka, R. J. Roe, N. Y. Hellman, P. M. Muglia, Macromolecules, 4, 507 (1971) incorporated herein by reference) in the Mark-Houwink equation (EQ 1), which relates intrinsic viscosity to molecular weight. The instantaneous molecular weight

($M_{(PP)}$) at each chromatographic point is determined by EQ 2, using universal calibration and the Mark-Houwink coefficients as defined in EQ 1. The number-average, weight-average, and z-average molecular weight moments, Mn, Mw, and Mz were calculated according to EQ 3, EQ 4, and EQ 5, respectively, wherein RI is the baseline-subtracted refractometer signal height of the polymer elution peak at each chromatographic point (i).

$$\{\eta\} = KM^a \qquad \text{(EQ 1)}$$

where $K_{pp}$ - 1.90E-04, $a_{pp}$ = 0.725 and $K_{ps\,=}$ 1.26E-04, $a_{ps\,=}$ 0.702.

$$M_{(PP)} = \left( \frac{K_{PS} M_{PS}^{\;a_{PS}+1}}{K_{PP}} \right)^{\frac{1}{a_{PP}+1}} \qquad \text{(EQ 2)}$$

$$Mn_{(GPC)} = \frac{\sum^{i} RI_i}{\sum^{i} \left( RI_i / M_{(PP)_i} \right)} \qquad \text{(EQ 3)}$$

$$Mw_{(GPC)} = \frac{\sum^{i} \left( RI_i * M_{(PP)_i} \right)}{\sum^{i} RI_i} \qquad \text{(EQ 4)}$$

$$Mz_{(GPC)} = \frac{\sum^{i} \left( RI_i * M_{(PP)_i}^{\;2} \right)}{\sum^{i} \left( RI_i * M_{(PP)_i} \right)} \qquad \text{(EQ 5)}$$

*Ethylene-Based Polymers*

A PolymerChar (Valencia, Spain) high temperature Gel Permeation Chromatography system consisting of an infra-red concentration detector (IR-5) was used for MW and MWD determination. The solvent delivery pump, the on-line solvent degas device, auto-sampler, and column oven were from Agilent. The column compartment and detector compartment were operated at 150°C. The columns were three PLgel 10 μm Mixed-B, columns (Agilent). The carrier solvent was 1,2,4-trichlorobenzene (TCB) with a flow rate of 1.0 mL/min. Both solvent sources for chromatographic and sample preparation contained 250 ppm of butylated hydroxytoluene (BHT) and were nitrogen sparged. Polyethylene samples were prepared at targeted polymer concentrations of 2 mg/mL by dissolving in TCB at 160°C for 3 hour on the auto-sampler just prior the injection. The injection volume was 200 μL.

Calibration of the GPC column set was performed with 21 narrow molecular weight distribution polystyrene standards. The molecular weights of the standards ranged from 580 to 8,400,000 g/mol, and were arranged in 6 "cocktail" mixtures, with at least a decade of separation between individual molecular weights. The polystyrene standard peak molecular weights were converted to polyethylene molecular weights using the following equation (as described in Williams and Ward, J. Polym. Sci., Polym. Let., 6, 621 (1968)):

$$M_{polyethylene} = A(M_{polystyrene})^B \quad (1)$$

Here B has a value of 1.0, and the experimentally determined value of A is around 0.42.

A third order polynomial was used to fit the respective polyethylene-equivalent calibration points obtained from equation (1) to their observed elution volumes. The actual polynomial fit was obtained so as to relate the logarithm of polyethylene equivalent molecular weights to the observed elution volumes (and associated powers) for each polystyrene standard.

Number-, weight- and z-average molecular weights are calculated according to the following equations:

$$\overline{Mn} = \frac{\sum^{i} Wf_i}{\sum^{i} \left( Wf_i / M_i \right)} \quad (2)$$

$$\overline{Mw} = \frac{\sum^{i} \left( Wf_i * M_i \right)}{\sum^{i} Wf_i} \quad (3)$$

$$\overline{Mz} = \frac{\sum^{i} \left( Wf_i * M_i^2 \right)}{\sum^{i} \left( Wf_i * M_i \right)} \quad (4)$$

Where, $Wf_i$ is the weight fraction of the $i$-th component and $M_i$ is the molecular weight of the $i$-th component. The MWD is expressed as the ratio of the weight average molecular weight (Mw) to the number average molecular weight (Mn).

The accurate A value was determined by adjusting A value in equation (1) until Mw, the weight average molecular weight calculated using equation (3) and the corresponding retention volume polynomial, agreed with the independently determined value of Mw obtained in accordance with the linear homopolymer reference with known weight average molecular weight of 120,000 g/mol.

Differential Scanning Calorimetry (DSC)

DSC was used to measure the melting and crystallization behavior of a polymer over a wide range of temperatures. For example, the TA Instruments Q1000 DSC, equipped with an RCS (refrigerated cooling system) and an autosampler was used to perform this analysis. During testing, a nitrogen purge gas flow of 50 ml/min was used. Each sample was melt pressed into a thin film at about 175°C; the melted sample was then air-cooled to room temperature (approx. 25°C). The film sample was formed by pressing a "0.1 to 0.2 gram" sample at 175°C at 1,500 psi, and 30 seconds, to form a "0.1 to 0.2 mil thick" film. A 3-10 mg, 6 mm diameter specimen was extracted from the cooled polymer, weighed, placed in a light aluminum pan (ca 50 mg), and crimped shut. Analysis was then performed to determine its thermal properties.

The thermal behavior of the sample was determined by ramping the sample temperature up and down to create a heat flow versus temperature profile. First, the sample was rapidly heated to 180°C, and held isothermal for five minutes, in order to remove its thermal history. Next, the sample was cooled to -40°C, at a 10°C/minute cooling rate, and held isothermal at -40°C for five minutes. The sample was then heated to 150°C (this is the "second heat" ramp) at a 10°C/minute heating rate. The cooling and second heating curves were recorded. The cool curve was analyzed by setting baseline endpoints from the beginning of crystallization to -20°C. The heat curve was analyzed by setting baseline endpoints from -20°C to the end of melt. The values determined were highest peak melting temperature ($T_m$), highest peak crystallization temperature ($T_c$), heat of fusion ($H_f$) (in Joules per gram), and the calculated % crystallinity for

polyethylene samples using: % Crystallinity = (($H_f$)/(292 J/g)) × 100. The heat of fusion ($H_f$) and the highest peak melting temperature were reported from the second heat curve. The highest peak crystallization temperature is determined from the cooling curve.

Hysteresis Tests

*Permanent Set*

The nonwovens were measured both machine and cross direction orientation with a Zwick Z010 instrument equipped with a 100 N load cell and pneumatic grips under ambient conditions. Five 25mm × 50mm specimens were cut from nonwovens and each sample was placed in the tensile tester jaws with a 25mm gauge length. The specimens were initially stretched to achieve a pre-force load of 0.1 N at a speed of 50 mm/min. The specimens were then elongated to an applied strain of 100% at a constant speed of 125 mm/min, then held at a 100% strain for 30 seconds. The specimens were then unloaded to 0% strain at the same speed (125 mm/min) and then held for 60 seconds. The specimens were then re-stretched to an applied strain of 100% at the same speed (125 mm/min), held for 30 seconds, and unloaded back to 0% strain at the same speed (125 mm/min), thus completing two load and unload cycles. Five specimens were tested for each nonwoven at the maximum applied strain of 100%. The permanent set was determined as applied strain on the second load cycle at which the stress was 0.1 N.

*First and Second Cycle Retraction* & *Extension Force*

The nonwovens were measured in both machine and cross direction orientation with a Zwick Z010 instrument equipped with a 100 N load cell and pneumatic grips under ambient conditions. Five 25mm × 50mm specimens were cut from nonwoven and each sample was placed in the tensile tester jaws with a 25mm gauge length. The specimen thickness is specified in Table 7 below. The specimens were initially stretched to achieve a pre-force load of 0.1 N at a speed of 50 mm/min. The specimens were then elongated to an applied strain of 100% at a constant speed of 125 mm/min, then held at a 100% strain for 30 seconds. The specimens were then unloaded to 0% strain at the same speed (125 mm/min) and then held for 60 seconds. The specimens were then re-stretched to an applied strain of 125% at the same speed (125 mm/min), held for 30 seconds, and unloaded back to 0% strain at the same speed (125 mm/min), thus completing two load and unload cycles. Five specimens were tested for each nonwoven at the maximum applied strain of 100%. The donning force at strain levels of 100% were recorded for the first and second load cycles. The retraction force at strain levels of 50% were recorded for the first and second unload cycles.

Seal Strength

Heat Seal was conducted on a J & B hot tack tester 400, with a sample of 25 mm width, 0.5 seconds of sealing time, and 0.275 $N/mm^2$ of seal pressure. Sealed specimens were backed up with polyethylene terephthalate (PET) tape. Seal strength was tested on a ZWICK universal tester, with 500 mm/s of peel speed after 24 hours of conditioning (at 23°C and 50% relative humidity).

From the above heat seal strength measurements, the heat seal initiation temperature (HSIT) is determined as the lowest temperature at which the seal strength reaches above 5N /25 mm.

**EXAMPLES**

Table 1: Raw Materials

| Grade Name | Product type | Density [$g/cm^3$] | Melt Index (I2) [g/10 min] | Melt Flow Rate (MFR2 ) [g/10 min] |
|---|---|---|---|---|
| ASPUN™ 6000 (available from The Dow Chemical Company) | linear low density polyethylene | 0.935 | 19 | N/A |
| INFUSE™ 9807 (available from The Dow Chemical Company) | ethylene/alpha-olefin block copolymer | 0.866 | 15 | N/A |
| VERSIFY™ 2200 (available from The Dow Chemical Company) | propylene-based elastomer | 0.876 | 2 | 8 |

(continued)

| Grade Name | Product type | Density [g/cm$^3$] | Melt Index (I2) [g/10 min] | Melt Flow Rate (MFR2 ) [g/10 min] |
|---|---|---|---|---|
| LUPEROX™ | polypropylene-based | N/A | N/A | N/A |
| 101PP7.5 (available from Arkema Inc.) | viscosity modifier | | | |
| PBE Compound | propylene-based elastomer | 0.876 | N/A | 49.9 |
| POLYBATCH™ SPER 6 (available from A. Schulman) | polypropylene-based slippery masterbatch | N/A | N/A | 68 |

Production of PBE Compound

The PBE compound formulation, as shown in Table 2 below, was prepared using a Coperion twin screw compounder, Model ZSK-40, by dry blending the components listed in Table 2. Additional process information is provided in Tables 3A & 3B.

Table 2: PBE Compound Formulation

| Component | Wt.% Of Each Component |
|---|---|
| VERSIFY™ 2200 | 98.2 |
| LUPEROX™ 101PP7.5 | 1.8 |
| Total %: | 100 |

Table 3A: Process Conditions for Compounder

| Extruder | | Screw temp (°C) | | | | | |
|---|---|---|---|---|---|---|---|
| screw speed | feeder | unit 1 | unit 2 | unit 3-11 | unit 12 | Unit 13 Die | PM1 /bar |
| 200 rpm | 30kg/h | N/A | 140 | 220 | 180 | 60 | 6 |

Table 3B: Process Conditions for Compounder

| Pelletizing unit | temp./C | | | | |
|---|---|---|---|---|---|
| | process water | Die plate | pelletizing speed | melt pressure | knife wear |
| VERSIFY™ 2200 | 8 | 130 | 1200 rpm | 45 bar | 0.2mm |

Table 4: Viscosity Data

| Shear Rate [1/s] | INFUSE™ 9807 (Core) [Pa*s] | PBE compound (Sheath) [Pa*s] | Core/Sheath viscosity ratio |
|---|---|---|---|
| 1180 | 100 | 59 | 1.7:1 |
| 2360 | 69 | 41 | 1.7:1 |
| 4720 | 44 | 27 | 1.6:1 |

Given the bicomponent fiber formulations in Table 5, the core/sheath viscosity ratio ranges are determined for the resins present in the core composition and the sheath composition, excluding the slippery masterbatch. The result is a core/sheath viscosity ratio from 1.6:1 to 1.7:1 at a shear rate range of from 1,000/s to 5,000/s.

Bicomponent fibers are made using the formulation as shown in Table 5 below. The sheath composition shown

for Inventive 1 and 2 is first compounded using a Coperion twin screw compounder, Model ZSK-40, by dry blending the components listed. Additional process information for compounding the sheath composition for Inventive 1 and 2 is provided in Tables 6A & 6B. Additional information on the bicomponent fibers, which are used to form spunbond nonwovens are provided below.

Table 5: Bicomponent Fiber Composition

| | Core ratio | Core composition | Sheath ratio | Sheath composition |
|---|---|---|---|---|
| Comparative A | 90 | INFUSE™ 9807 | 10 | ASPUN™ 6000 |
| Inventive 1 | 90 | INFUSE™ 9807 | 10 | 97% PBE compound + 3% POLYBATCH™ SPER 6 |
| Inventive 2 | 95 | INFUSE™ 9807 | 5 | 97% PBE compound + 3% POLYBATCH™ SPER 6 |

Table 6A: Process Conditions for Compounder

| Extruder | | Screw temp./C | | | | | |
|---|---|---|---|---|---|---|---|
| screw speed | feeder | unit 1 | unit 2 | unit 3-11 | unit 12 | Unit 13 Die | PM1 /bar |
| 200 rpm | 30kg/h | N/A | 140 | 220 | 180 | 60 | 6 |

Table 6B: Process Conditions for Compounder

| Pelletizing unit | temp./C | | | | |
|---|---|---|---|---|---|
| | process water | Die plate | pelletizing speed | melt pressure | knife wear |
| | 9 | 150 | 1300 rpm | 38 bar | 0.2mm |

Spunbond nonwovens were prepared on a Kasen Nozzle bicomponent lab spunbond line in Japan. The line applies an open type spinning system. The bicomponent die was used operating at a 90/10 and 95/5 core/sheath ratio at a throughput rate of 0.36-0.38/0.40 ghm. The die configuration consists of 797 holes, with a hole diameter of 0.6 mm and an L/D of 3/1. Quench air temperature and flow were set at 12.5 °C, and 0.4 m/sec, respectively. Extruder profiles were adjusted to achieve a melt temperature of 220 °C. Die to ejector distance, ejector pressure, and ejector air flow were set at 1300mm, 1.5 kg/cm$^2$ and 500 Nm$^3$/hr, respectively. The nonwonvens were analyzed and the results are shown below in Tables 7 and 8.

Table 7: 2$^{nd}$ Cycle Hysteresis Data

| | Second cycle Donning force (N) | Second cycle Retractive force (N) | Second cycle Immediate set (%) | Second cycle Permanent set (%) | Second cycle gap at 50% elongation (N) |
|---|---|---|---|---|---|
| Comparative A Machine Direction (MD) | 6.89 | 0.49 | 18.04 | 2.7 | 2.26 |
| Comparative A Cross Direction (CD) | 3.66 | 0.06 | 26.01 | 3.75 | 1.33 |
| Inventive 1 MD | 9.93 | 0.76 | 13.15 | 1.42 | 1.52 |
| Inventive 1 CD | 4.69 | 0.39 | 17.23 | 2.17 | 0.78 |
| Inventive 2 MD | 4.80 | 0.60 | 14.43 | 1.63 | 0.76 |
| Inventive 2 CD | 3.08 | 0.34 | 16.20 | 2.13 | 0.57 |

Referring to Table 7, inventive 1 & 2 show overall better elastic performance as compared to comparative A. Specifically, inventive 1 & 2 show lower elastic energy loss as shown in FIGS. 1 and 2, and as shown by the lower gap

at 50% elongation values. In addition, inventive 1 and 2 exhibit higher retractive force, lower permanent set, and lower immediate set as compared to comparative example A in both the MD and CD of 2nd cycle of hysteresis testing.

Table 8: Seal Performance

| | Seal Initiation Temperature (°C) |
|---|---|
| Comparative A | 130 |
| Inventive 1 | 120 |
| Inventive 2 | 120 |

Referring to Table 8 and FIG. 3, inventive 1 and 2 show better seal performance by having a lower heat seal initiation temperature when compared to comparative A.

The dimensions and values disclosed herein are not to be understood as being strictly limited to the exact numerical values recited. Instead, unless otherwise specified, each such dimension is intended to mean both the recited value and a functionally equivalent range surrounding that value. For example, a dimension disclosed as "40 mm" is intended to mean "about 40 mm."

While particular embodiments of the present invention have been illustrated and described, it would be obvious to those skilled in the art that various other changes and modifications can be made without departing from the scope of the invention. It is therefore intended to cover in the appended claims all such changes and modifications that are within the scope of this invention.

## Claims

**1.** A bicomponent fiber having a sheath and a core, wherein:

the core comprises at least 50 wt.% of an ethylene/alpha-olefin block copolymer having a density of 0.860 g/cc - 0.885 g/cc, as measured in accordance with ASTM D-792, and a melt index, 12, of 10 g/10 min to 60 g/10 min, as measured in accordance with ASTM D 1238-10, Condition, 190 °C/2.16 kg; and
the sheath comprises at least 50 wt.% of a propylene-based elastomer having a melt flow ratio, MFR, of 30 g/10 min to 250 g/10 min, as measured in accordance with ASTM D 1238-10, Condition 230 °C/2.16 kg;
wherein the core/sheath viscosity ratio is from 1:1 to 5:1 at a shear rate of 1,000/s to 5,000/s, as measured according to the method described in the description.

**2.** The fiber of claim 1, wherein the propylene-based elastomer has a molecular weight distribution (Mw/Mn) of 1.5 to 3.0, as determined by gel permeation chromatography (GPC), where Mw is the weight average molecular weight and Mn is the number average molecular weight.

**3.** The fiber of claims 1 or 2, wherein the propylene-based elastomer has a Mz/Mw of 1.5 to 2.5, as determined by gel permeation chromatography (GPC), where Mw is the weight average molecular weight and Mz is the z average molecular weight.

**4.** The fiber of claims 1-3, wherein the sheath to core ratio is from 20/80 to 5/95.

**5.** The fiber of claims 1-4, wherein the core comprises at least 75 wt.% of the ethylene/alpha-olefin block copolymer and the sheath comprises at least 75 wt.% of the propylene-based elastomer.

**6.** The fiber of claims 1-5, wherein the propylene-based elastomer has an MFR of from 30 to 80 g/10 min, as measured in accordance with ASTM D 1238-10, Condition 230 °C/2.16 kg.

**7.** The fiber of claims 1-6, wherein the core/sheath viscosity ratio is from 1:1 to 3:1 at a shear rate of 1,000/s to 5,000/s, as measured according to the method described in the description.

**8.** A spunbond nonwoven formed from the bicomponent fiber of claims 1-7.

## Patentansprüche

1. Bikomponentenfaser, die einen Mantel und einen Kern aufweist, wobei:

   der Kern zu mindestens 50 Gew.-% ein Ethylen/Alpha-Olefin-Blockcopolymer, das eine Dichte von 0,860 g/cc - 0,885 g/cc, gemessen gemäß ASTM D-792, und einen Schmelzindex, 12, von 10 g/10 min bis 60 g/10 min, gemessen gemäß ASTM D 1238-10, Bedingung, 190 °C/2,16 kg, aufweist, umfasst; und
   der Mantel zu mindestens 50 Gew.-% ein Elastomer auf Propylenbasis, das ein Schmelzflussverhältnis, MFR, von 30 g/10 min bis 250 g/10 min, gemessen gemäß ASTM D 1238-10, Bedingung 230 °C/2,16 kg aufweist, umfasst;
   wobei das Kern/Mantel-Viskositätsverhältnis von 1 : 1 bis 5 : 1 bei einer Scherrate von 1.000/s bis 5.000/s, gemessen gemäß dem in der Beschreibung beschriebenen Verfahren, beträgt.

2. Faser nach Anspruch 1, wobei das Elastomer auf Propylenbasis eine Molekülmasseverteilung (Mw/Mn) von 1,5 bis 3,0, bestimmt durch Gelpermeationschromatographie (GPC), aufweist, wobei Mw die gewichtsgemittelte Molekülmasse ist und Mn die zahlengemittelte Molekülmasse ist.

3. Faser nach Anspruch 1 oder 2, wobei das Elastomer auf Propylenbasis eine Mz/Mw von 1,5 bis 2,5, bestimmt durch Gelpermeationschromatographie (GPC), aufweist, wobei Mw die gewichtsgemittelte Molekülmasse ist und Mz die z-gemittelte Molekülmasse ist.

4. Faser nach Ansprüchen 1 bis 3, wobei das Mantel-zu-Kern-Verhältnis von 20 / 80 bis 5 / 95 beträgt.

5. Faser nach Ansprüchen 1 bis 4, wobei der Kern zu mindestens 75 Gew.-% das Ethylen/Alpha-Olefin-Blockcopolymer umfasst und der Mantel zu mindestens 75 Gew.-% das Elastomer auf Propylenbasis umfasst.

6. Faser nach Ansprüchen 1 bis 5, wobei das Elastomer auf Propylenbasis ein MFR von 30 bis 80 g/10 min, gemessen gemäß ASTM D 1238-10, Bedingung 230 °C/2,16 kg, aufweist.

7. Faser nach Ansprüchen 1 bis 6, wobei das Kern/Mantel-Viskositätsverhältnis von 1 : 1 bis 3 : 1 bei einer Scherrate von 1.000/s bis 5.000/s, gemessen gemäß dem in der Beschreibung beschriebenen Verfahren, beträgt.

8. Spinnvliesstoff, der aus der Bikomponentenfaser nach den Ansprüchen 1 bis 7 ausgebildet wird.

## Revendications

1. Fibre à deux composants ayant une gaine et une âme, dans laquelle :

   l'âme comprend au moins 50 % en poids d'un copolymère séquencé d'éthylène/alpha-oléfine ayant une masse volumique de 0,860 g/cm3 à 0,885 g/cm3, telle que mesurée conformément à ASTM D-792, et un indice de fusion, 12, de 10 g/10 min à 60 g/10 min, tel que mesuré conformément à ASTM D 1238-10, Condition, 190 °C/2,16 kg ; et
   la gaine comprend au moins 50 % en poids d'un élastomère à base de propylène ayant un rapport d'écoulement en fusion, MFR, de 30 g/10 min à 250 g/10 min, tel que mesuré conformément à ASTM D 1238-10, Condition 230 °C/2,16 kg ;
   dans laquelle le rapport de viscosité âme/gaine va de 1:1 à 5:1 à un taux de cisaillement de 1000/s à 5000/s, tel que mesuré selon le procédé décrit dans la description.

2. Fibre selon la revendication 1, dans laquelle l'élastomère à base de propylène a une distribution de masses moléculaires (Mw/Mn) de 1,5 à 3,0, telle que déterminée par chromatographie par perméation sur gel (CPG), où Mw est la masse moléculaire moyenne en poids et Mn est la masse moléculaire moyenne en nombre.

3. Fibre selon les revendications 1 ou 2, dans laquelle l'élastomère à base de propylène a un Mz/Mw de 1,5 à 2,5, tel que déterminé par chromatographie par perméation sur gel (GPC), où Mw est la masse moléculaire moyenne en poids et Mz est masse moléculaire moyenne z.

4. Fibre selon les revendications 1 à 3, dans laquelle le rapport de la gaine à l'âme va de 20/80 à 5/95.

**5.** Fibre selon les revendications 1 à 4, dans laquelle l'âme comprend au moins 75 % en poids du copolymère séquencé d'éthylène/alpha-oléfine et la gaine comprend au moins 75 % en poids de l'élastomère à base de propylène.

**6.** Fibre selon les revendications 1 à 5, dans laquelle l'élastomère à base de propylène a un MFR allant de 30 à 80 g/10 min, tel que mesuré conformément à ASTM D 1238-10, Condition 230 °C/2,16 kg.

**7.** Fibre selon les revendications 1 à 6, dans laquelle le rapport de viscosité âme/gaine va de 1:1 à 3:1 à un taux de cisaillement de 1000/s à 5000/s, tel que mesuré selon le procédé décrit dans la description.

**8.** Non-tissé filé-lié formé à partir de la fibre à deux composants selon les revendications 1 à 7.

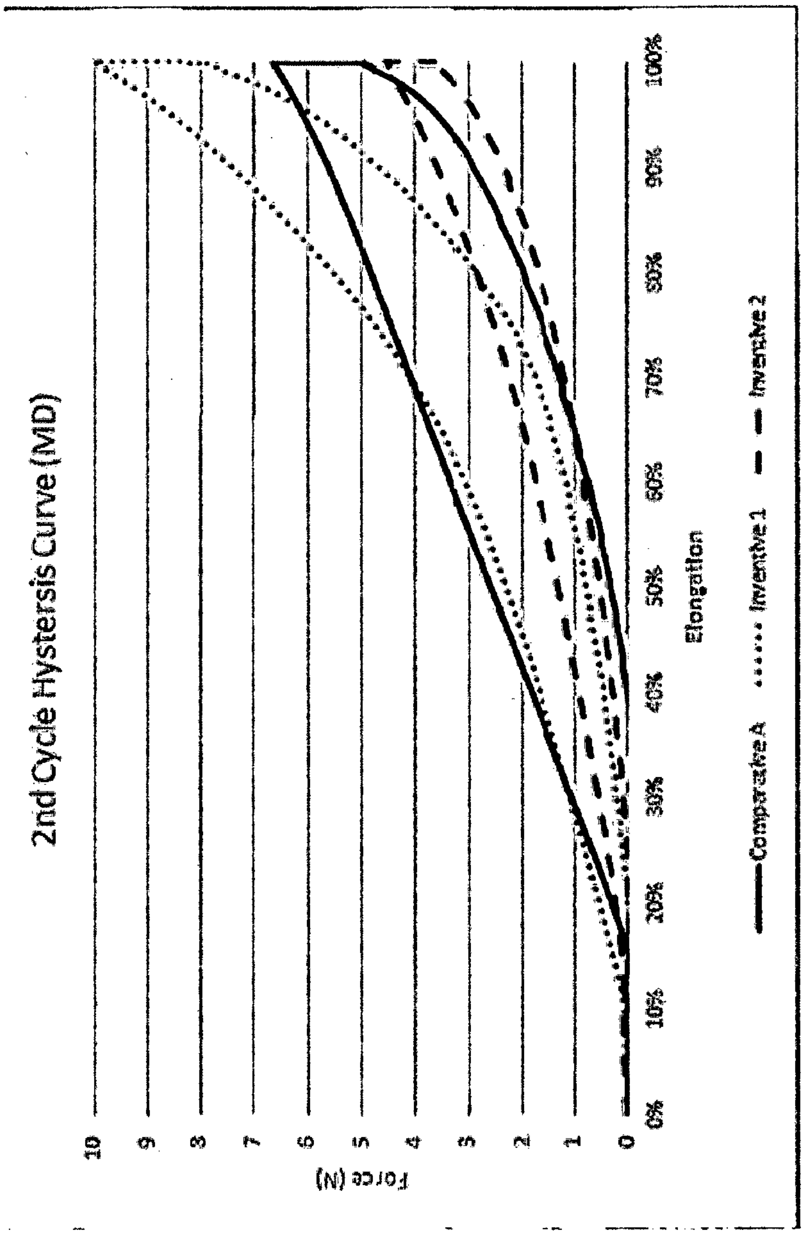
2nd Cycle Hysteresis Curve (MD)
Force (N)
0
1
2
3
4
5
6
7
8
9
10
0%
10%
20%
30%
40%
50%
60%
70%
80%
90%
100%
Elongation
Comparative A
Inventive 1
Inventive 2

FIG.1

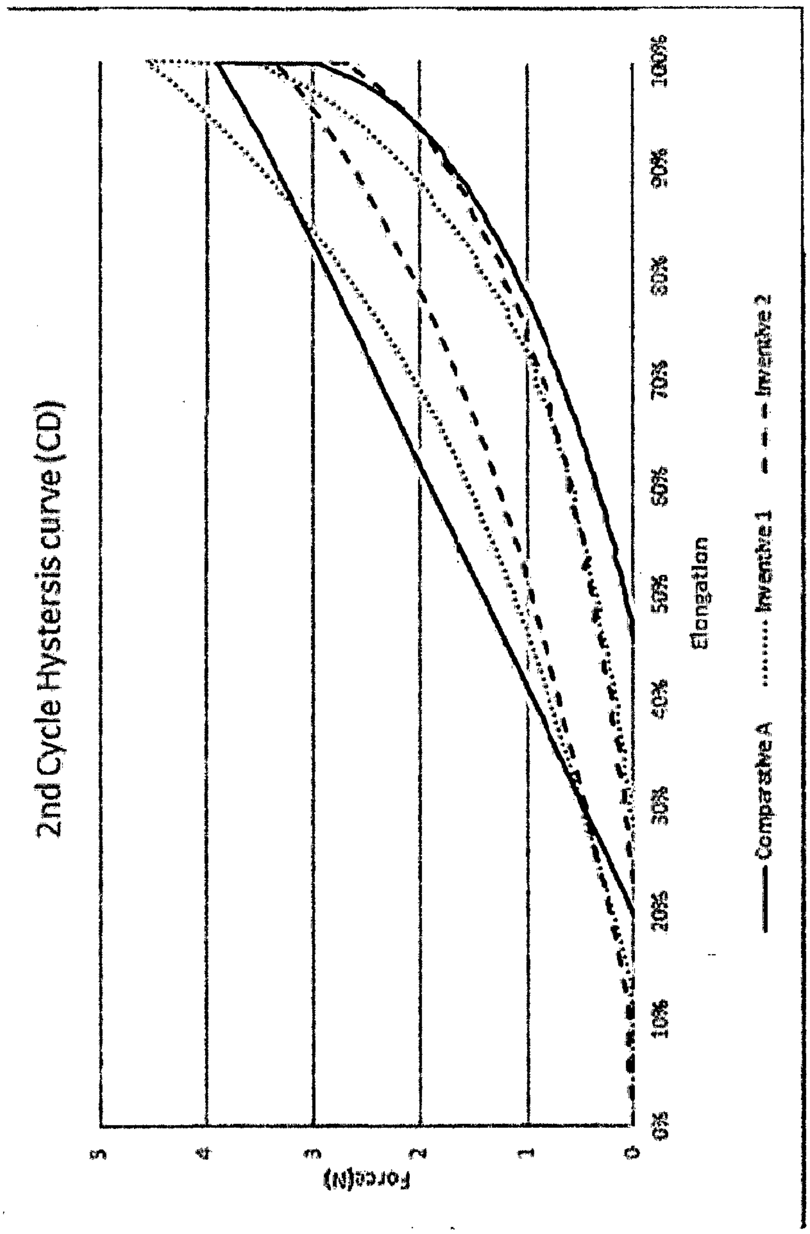
2nd Cycle Hysteresis curve (CD)
Force(N)
0
1
2
3
4
5
0%
10%
20%
30%
40%
50%
60%
70%
80%
90%
100%
Elongation
Comparative A
Inventive 1
Inventive 2

FIG.2

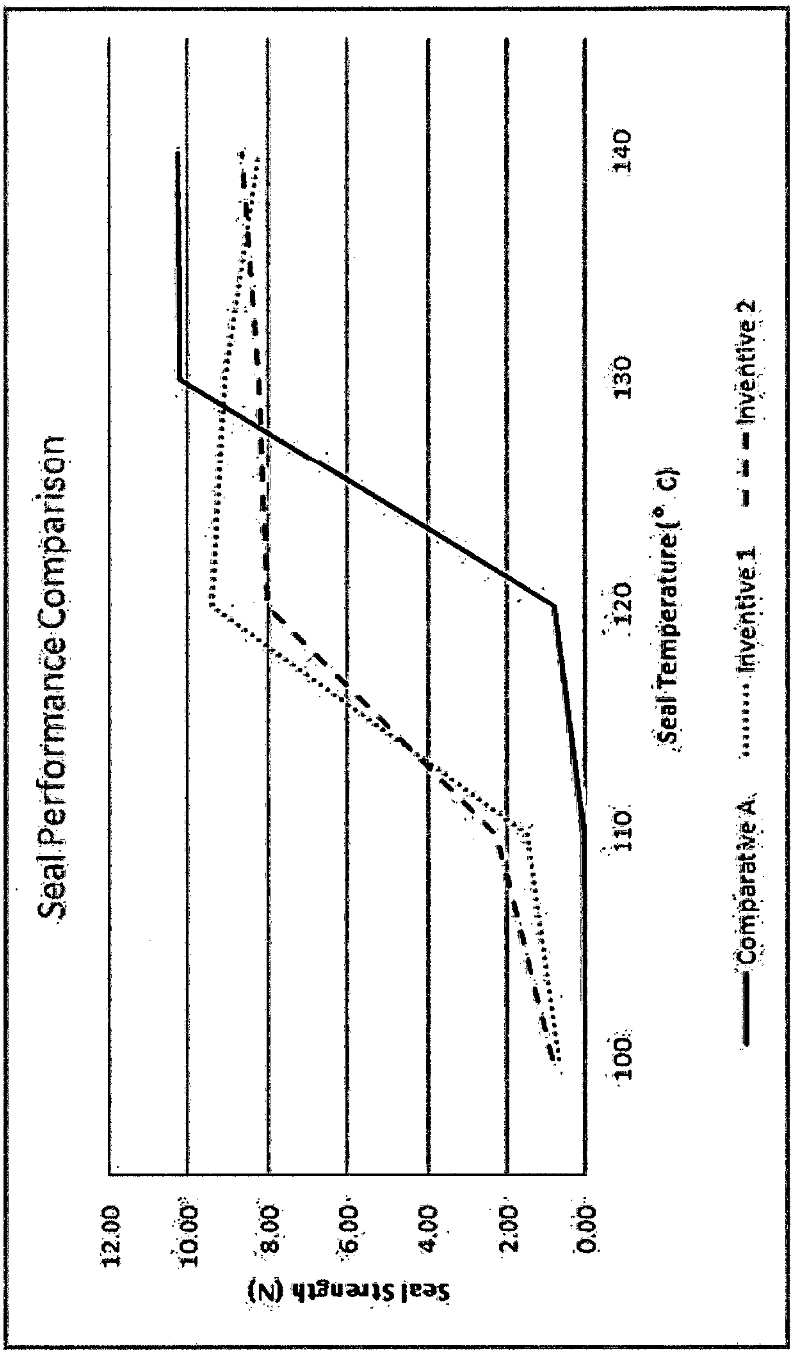

Seal Performance Comparison
Seal Strength (N)
12.00
10.00
8.00
6.00
4.00
2.00
0.00
100
110
120
130
140
Seal Temperature (° C)
Comparative A
Inventive 1
Inventive 2


FIG.3

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2009111185 A2
- US 7498282 B
- US 7608668 B, Colin L. P. Shan, Lonnie Hazlitt,
- US 7858706 B
- US 7893166 B
- US 7947793 B


### Non-patent literature cited in the description


- **POTEMKIN.** *Physical Review E,* 1998, vol. 57 (6), 6902-6912
- **DOBRYNIN, J.** *Chem.Phvs.,* 1997, vol. 107 (21), 9234-9238
- **TH.G. SCHOLTE ; N.L.J. MEIJERINK ; H.M. SCHOFFELEERS ; A.M.G. BRANDS.** *J. Appl. Polym. Sci.,* 1984, vol. 29, 3763-3782
- **E. P. OTOCKA ; R. J. ROE ; N. Y. HELLMAN ; P. M. MUGLIA.** *Macromolecules,* 1971, vol. 4, 507
- **WILLIAMS ; WARD.** *J. Polym. Sci., Polym. Let.,* 1968, vol. 6, 621